# EUROPÄISCHE PATENTSCHRIFT

(11) **EP 4 638 207 B1**
(45) Veröffentlichungstag und Bekanntmachung des Hinweises auf die Patenterteilung: **02.12.2026**
(21) Anmeldenummer: 23822261.6
(22) Anmeldetag: 07.12.2023
(51) Int. Cl.: B60T 1/06, F16D 65/14

(54) **ELEKTRISCHER ANTRIEB MIT INTEGRIERTEN BREMSEN**
ELECTRIC DRIVE WITH INTEGRATED BRAKES
ENTRAÎNEMENT ÉLECTRIQUE AVEC FREINS INTÉGRÉS

(30) Priorität: 21.12.2022 DE 102022214116
(43) Veröffentlichungstag der Anmeldung: 29.10.2025
(73) Patentinhaber: MAGNA Powertrain GmbH & Co KG, 8502 Lannach (AT)
(72) Erfinder: LUGMAYR, Thomas, 4523 Neuzeug (AT); BELGAVI, Mahesh, Pune 411021 (IN); GAIKWAD, Sushil, Pune 411047 (IN); JAMBHALE, Prasad, Dhule 424001 (IN)
(74) Vertreter: Reuter, Silke Beatrix
(86) Internationale Anmeldenummer: PCT/EP2023/084791
(87) Internationale Veröffentlichungsnummer: WO 2024/132572

(56) Entgegenhaltungen:
- WO-A1-2020/060462
- DE-A1- 102019 213 624
- US-A1- 2002 020 601
- US-A1- 2016 097 430

## Beschreibung

Die Erfindung betrifft einen elektrischen Antrieb für ein Fahrzeug, wobei mindestens eine elektrische Maschine, ein Differential und zwei Bremsen in einem gemeinsamen Gehäuse verbaut sind, wobei die Bremsen Lamellenbremsen sind.

Die Erfindung betrifft auch ein Verfahren zur Betätigung von Bremsen eines elektrischen Antriebs eines Fahrzeugs.

### Stand der Technik

Feinstaub ist eines der größten Gesundheitsrisiken, die von Luftverschmutzung ausgehen. Laut Schätzungen mehrerer Studien ist Feinstaub jährlich für mehrere Millionen Todesfälle verantwortlich. Insbesondere ultrafeine Teilchen wie Rußpartikel werden als krebserregend eingestuft
Motoren sind nur eine Ursache des Problems, denn ein Großteil des innerstädtisch messbaren Feinstaubs geht auf Abriebpartikel zurück. Hauptverursacher dieser Partikel sind neben Reifen vor allem Bremsscheiben und Bremsbeläge.

Der Umstieg auf Elektroautos ändert nichts an diesem Problem, denn auch Elektroautos sind üblicherweise mit Scheiben- oder Trommelbremsen ausgeführt.

Somit würde auch der großflächige Umstieg auf Elektroautos an dieser Schadstoffbelastung nichts ändern.

Schwere Elektrofahrzeuge mit langer Batteriereichweite werden das Problem des Abriebs von Bremsen, Reifen und Straße sogar verstärken.

Also müssen Gegenmaßnahmen gefunden werden, die den Brems- und Reifenabrieb reduzieren. Während Emissionen von Verbrennungsprozessen intensiv analysiert wurden, steht die Forschung der sogenannten Non-Exhaust-Emissions, also der Nicht-Abgas-Partikelemissionen, noch am Anfang. Dies betrifft insbesondere die Simulation von Feinstaub- beziehungsweise Mikroplastikemissionen. Für die Emissionen von Nicht-Abgaspartikeln eines Fahrzeugs gibt es bislang keine festgelegte, einheitliche Testmethode.

Zudem existiert bislang keine Gesetzgebung zur Begrenzung oder Reduzierung der Nicht-Abgas-Partikelemissionen. Für die bremsinduzierte Feinstaubentwicklung ist eine gesetzliche Festlegung von Grenzwerten jedoch angekündigt.

Hersteller und Zulieferer suchen indes nach Ansätzen und technischen Lösungen, um den Brems- und Reifenabrieb zu reduzieren. Mit der Hartstoffbeschichtung von Bremsscheiben via Diodenlaser ist künftig ein Verfahren verfügbar, das eine Reduktion der bremsbedingten Feinstaubemission ermöglicht. Die beschichteten Bremsen erzeugten zwar auch weiterhin Feinstaub, jedoch in weitaus geringerem Maße als unbeschichtete Bremsscheiben. Die Vorteile der Grauguss-Bremsscheibe blieben dabei weiterhin erhalten.

Bei elektrischen Fahrzeugen sind die Bremsen zumeist als Scheiben- oder Trommelbremsen ausgeführt und innerhalb des Radkastens platziert.

Bekannt ist ein Projekt ZEDU1 (Zero Emission Drive Unit) der DLR. Die Bremsanlage wandert darin vom Radträger in die Antriebseinheit und wir dort integriert. In Kombination mit einer speziell abgestimmten Hochleistungselektronik, einer Leistungsbatterie und eines BBW-Systems (Break by Wire) kann die Bremsenergie nahezu vollständig zurückgewonnen, also rekuperiert werden, so dass der mechanische Bremsanteil auf ein Minimum reduziert wird. Das ermöglicht es, die Antriebseinheit sehr kompakt zu bauen, diese in die Getriebe- Bremseneinheit zu integrieren und Bremsabriebsemissionen komplett zu eliminieren. Im ZEDU-1 ist eine Lamellenbremse direkt in den Elektromotor integriert. Sie sorgt zusammen mit der Hochleistungselektronik für eine fast vollständige Antriebsenergierückgewinnung. Dabei landet der Bremsabrieb in einem Ölbad, dessen Inhalt ständig durch einen Filter gepumpt und gereinigt wird.

Aus dem Dokument US 2016/097430 A1 ist eine Allradschaltkupplung bekannt. Der Kupplungsmechanismus umfasst ein erstes und ein zweites Drehelement, eine Kupplungsnabe, eine Kupplungstrommel, eine Vielzahl von Reibungs-Eingriffselementen, einen Kolben, eine Kolbenantriebsvorrichtung und eine Hülse.

Das Dokument US 2002/020601 A1 beschreibt eine konventionelle Lamellenkupplung mit Druckfedern zur Separation der Lamellenscheiben.

Die Dokumente WO 2020/060462 A1 und DE 10 2019 213 624 A1 offenbaren Retarder mit entkoppelbarem Rotor.

Es ist Aufgabe der Erfindung eine verbesserte elektrische Achse für ein Fahrzeug mit integrierten Bremsen vorzustellen, die in die elektrische Antriebseinheit integriert sind, wobei die aus dem Stand der Technik bekannten Probleme weitgehend vermieden werden.

Die Aufgabe wird gelöst mit einem elektrischen Antrieb für ein Fahrzeug, wobei mindestens eine elektrische Maschine, ein Differential und zwei Bremsen in einem gemeinsamen Gehäuse verbaut sind, wobei die Bremsen Lamellenbremsen mit einem ersten Lamellenträger mit erstem Lamellenpaket und zweitem Lamellenträger mit zweitem Lamellenpaket sind, wobei die Bremsen ein Bremsengehäuse umfassen, und wobei die ersten Lamellenträger gehäusefest angeordnet und die zweiten Lamellenträger in der Neutralstellung mechanisch entkoppelt und nicht mitdrehend auf den Seitenabtriebswellen des Differentials angeordnet sind und wobei die Bremsen weiterhin derart ausgebildet sind, dass im Betätigungsfall die zweiten Lamellenträger über eine Betätigungskraft an die Seitenabtriebswellen drehfest anbindbar sind und die Seitenabtriebswellen über die entsprechend zugeordneten Lamellenpakete mit dem Bremsgehäuse verbindbar sind, um ein Bremsmoment auf das Fahrzeug aufzubringen.

Die Bremse bzw. erster und zweiter Lamellenträger steht im Falle einer geöffneten Bremse (entspricht der Neutralstellung) vollständig und wird nur im Falle einer Betätigung mit der Ausgangswelle mechanisch verbunden. Der erste Lamellenträger ist in jeder Stellung, d.h. in der Neutralstellung und einer Betätigungsstellung an dem Bremsgehäuse gehäusefest angebunden. Durch ein "Stehen" der Lamellenbremsen als Ganzes in der Neutralstellung und wobei nur im Betätigungsfall eine mechanische Verbindung des zweiten Lamellenträgers mit zweitem Lamellenpaket mit der Ausganswelle erfolgt, werden Schleppverluste vergleichbar mit konventionellen Bremssystemen weitgehend vermieden.

Der erste Lamellenträger ist vorzugsweise der in Radialrichtung gesehen äußere Lamellenträger. Der zweite Lamellenträger ist dann entsprechend der innere Lamellenträger.

Der erste Lamellenträger ist gehäusefest angebunden. Der zweite Lamellenträger ist in der Neutralstellung stationär, d.h. nicht drehend angeordnet. Im Betätigungsfall ist der zweite Lamellenträger mit der Ausgangswelle zur Übertragung eines Bremsmoments verbindbar.

Der zweite Lamellenträger ist bevorzugt über ein Radiallager auf der Seitenabtriebswelle gelagert.

Die Bremse umfasst vorteilhafterweise eine auf der Seitenabtriebswelle drehfest angeordnete aber axial verschiebbar gelagert Betätigungsnabe.

Die axial verschiebbar gelagerte Betätigungsnabe ist bevorzugt als Keilnabe ausgebildet die auf einer entsprechenden Verzahnung der Seitenabtriebswelle formschlüssig angeordnet ist.

Vorteilhafterweise ist im Betätigungsfall der zweite Lamellenträger über eine Synchronisiereinheit mit der Seitenabtriebswelle drehfest verbindbar.

Synchronisiereinheiten werden in Kraftfahrzeugen beispielsweise in Getrieben in verschiedenen Varianten eingesetzt und sind dem Fachmann grundsätzlich bekannt. Sie dienen zur Drehzahlanpassung zwischen den zu koppelnden Elementen und damit zur Reduzierung der Schaltkraft und des Verschleißes. Eine bekannte Variante ist dabei eine Kegel-Reibkupplung. Je nach zu synchronisierendem Moment können ein oder mehrere Reibkegel vorhanden sein. Entsprechend ihrer Anzahl wird zwischen Einkonus-Synchronisation oder Mehrkonus-Synchronisation unterschieden.

In einer bevorzugten Ausführungsform der Bremse ist die Synchronisiereinheit als Einkonus-Synchronisierer ausgeführt. Die Kegelreibkupplung der Synchronisiereinheit wird zwischen einem ersten Synchronring und einem zweiten Synchronkörper gebildet.

Der erste Synchronring ist bevorzugt federvorbelastet und axial verschiebbar an der Betätigungsnabe abgestützt und auf der Seitenabtriebswelle gelagert und umfasst einen konischen Reibbelag.

Der zweite Synchronkörper ist an dem zweiten Lamellenträger ausgebildet und umfasst einen zu dem konischen Reibbelag des ersten Synchronrings korrespondierenden konischen Reibbelag. Zwischen den Reibbelägen ist die Kegelreibkupplung zur Erzielung einer reibschlüssigen Verbindung ausbildbar.

Ein Betätigungskolben bringt im Betätigungsfall eine Kraft auf die axial verschieblich aber drehfest auf der Seitenabtriebswelle angeordnete Betätigungsnabe auf. Diese ist über ein axiales Lager und eine Feder an dem axial verschiebbaren Synchronring abgestützt. Der Synchronring ist über eine Feder an dem zweiten Lamellenträger abgestützt. Der zweite Lamellenträger ist mit einem Synchronring gekoppelt bzw. ist mit einem Synchronkörper ausgeführt, so dass über eine axiale Verlagerung des Synchronrings dieser in reibschlüssigen Eingriff mit dem Synchronkörper des zweiten Lamellenträgers gelangt und eine reibschlüssige Verbindung zu der Seitenabtriebswelle herstellt. Der zweite Lamellenträger ist somit über die Synchronisierungseinheit in der Betriebsstellung an die Seitenabtriebswelle mechanisch, d.h. drehfest festlegbar.

Die Aufgabe wird auch gelöst mit einem Verfahren zum Bremsen eines elektrischen Antriebs, wobei die geöffnete Bremse in der Neutralstellung mit beiden Lamellenpakten nicht rotierend mit den Seitenabtriebswellen ausgebildet ist, wobei bei Betätigung der Bremse in zwei aufeinander ablaufenden Verschiebungsschritten zunächst die zweiten Lamellenpakete mit den Seitenabtriebswellen verbunden werden und anschließend über eine weitergehende Betätigungskraft die Seitenabtriebswellen über die ersten und zweiten reibschlüssig verbundenen Lamellenpakete mit dem Bremsgehäuse zur Erzeugung eines Bremsmoments verbunden werden.

In einem ersten Schritt des Verfahrens wird zunächst über eine Betätigung einer auf der Seitenabtriebswelle drehfest aber axial verschiebbaren Betätigungsnabe eine Synchronisation des mechanisch abgekoppelt von der Seitenabtriebswelle gelagerten zweiten Lamellenträgers mit zweitem Lamellenpaket ausgehend von der Drehzahl 0 auf die Drehzahl der abgetriebenen Welle des Differentials 21 bewirkt. Nach der Synchronisation ist der zweite Lamellenträger, der einen Synchronkörper umfasst über einen Synchronring reibschlüssig an der mit der Seitenabtriebswelle verbundenen Betätigungsnabe festgelegt.

Der erste Lamellenträger mit erstem Lamellenpaket ist sowohl in der Neutralstellung als auch im Betätigungsfall bei Einleitung einer Betätigungskraft an dem Bremsgehäuse gehäusefest festgelegt.

Im anschließenden zweiten Verfahrensschritt werden die alternierend zueinander angeordneten Lamellen des ersten und zweiten Lamellenpaketes durch eine weitergehende Betätigung axial verschoben und zueinander in Reibkontakt gebracht. In Abhängigkeit der weitergehenden Betätigungskraft wird ein entsprechendes Bremsmoment erzeugt.

Bei geschlossener Bremse erfolgt eine Beölung der Lamellenpakete durch eine Ölbohrung entlang der Seitenabtriebswelle und einer Bohrung in der verschieblichen Betätigungsnabe. Eine Beölung kann jedoch auch über eine externe Versorgung und Ansteuerung erfolgen.

### Beschreibung der Figuren

Es zeigt:
- Figur 1: eine Bremse des elektrischen Antriebs an einer Seitenabtriebswelle,
- Figur 2: den Aufbau des elektrischen Antriebs schematisch,
- Figur 3: die unbetätigte Bremse (Neutralstellung) in einer schematischen Darstellung in einem Axialschnitt,
- Figur 4: die betätigte Bremse in einem ersten Betätigungszustand in einer vereinfachten schematischen Darstellung; und
- Figur 5: die betätigte Bremse in einem zweiten Betätigungszustand in einer vereinfachten schematischen Darstellung.

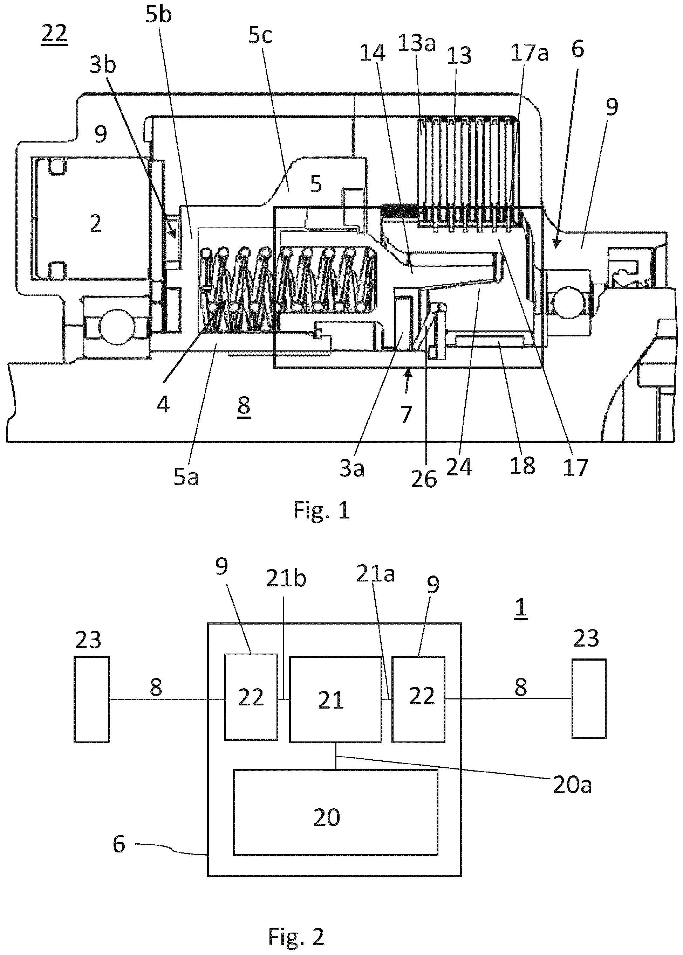

Figur 2 zeigt einen elektrische Antriebseinheit 1, die eine elektrische Maschine 20 enthält. Diese elektrische Maschine 20 ist mit einem nicht dargestellten Untersetzungsgetriebe wirkverbunden gekoppelt, das eine Getriebestufe aufweist. Die Getriebeausgangswelle 20a treibt in ein Differential 21 ein. Die getriebenen Wellen 21a, 21b des Differentials 21 sind mit den Seitenabtriebswellen 8 verbunden. Wie es aus der schematischen Darstellung der Figur 2 zu erkennen ist, sind beidseits des Differentials 21 in einer symmetrischen Anordnung Bremsen 22 angeordnet. Die Bremsen übertragen bei entsprechender Betätigung ein Bremsmoment auf die Seitenabtriebswellen 8. Die Seitenabtriebswellen 8 treiben die Rädern 23 des Fahrzeugs an.

Die Bauteile elektrische Maschine 20 mit Untersetzungsgetriebe, Differential 21 und Bremsen 22 sind in einem gemeinsamen Gehäuse 6 verbaut und bilden ein Modul. Die Bremsen umfassen ein Bremsgehäuse 9.

Figur 1 zeigt die Bremse 22 einer Seite des Differentials 21 der elektrischen Antriebseinheit 1 in einem Axialschnitt in einer schematischen Darstellung.

Nachfolgend wird nur die Bremse 22 auf einer Seite des Differentials 21 beschrieben. Die Bremse auf der gegenüberliegenden anderen Seite des Differentials auf der gegenüberliegenden Seitenantriebswelle 8 ist entsprechend symmetrisch aufgebaut.

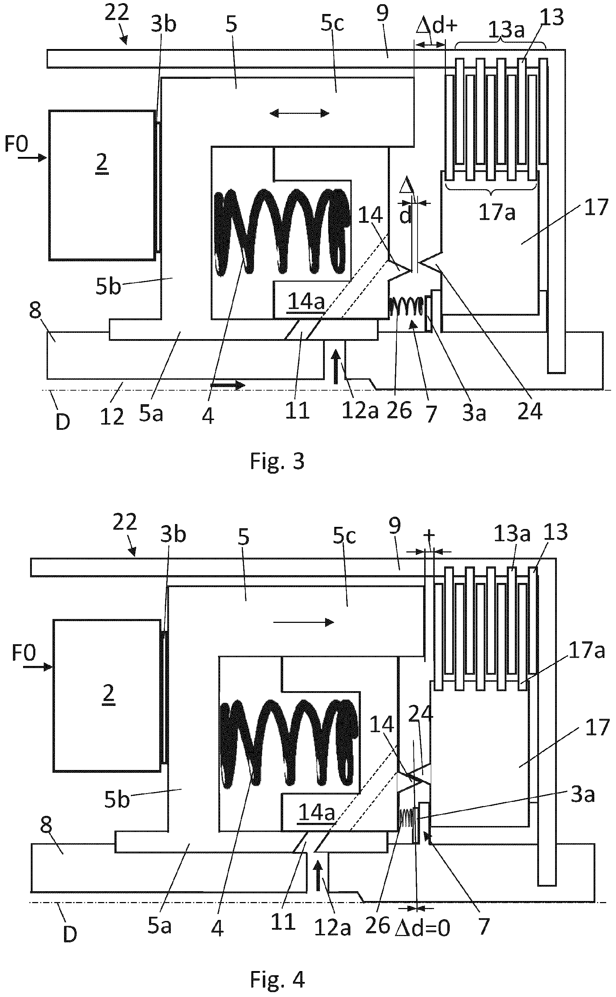

Figur 3 zeigt in einer stark vereinfachten schematischen Darstellung ebenfalls die Bremse 22 im geöffneten Zustand, der der Neutralstellung entspricht. Die Darstellung zeigt nur einen Teilausschnitt der Bremse22. Die Drehachse D der Seitenabtriebswelle 8 ist in den Figuren eingezeichnet.

Die Richtung längs der Drehachse D wird nachfolgend als Axialrichtung bezeichnet.

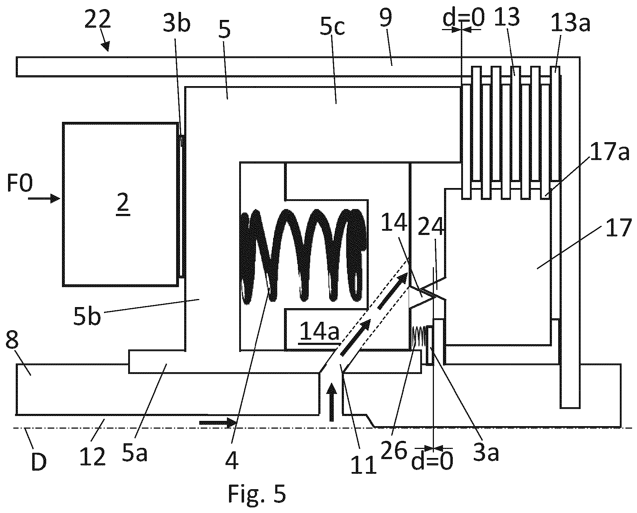

Die Bremse 22 weist einen ersten Lamellenträger 13 mit einem ersten Lamellenpaket 13a und einen zweiten Lamellenträger 17 mit einem zweiten Lamellenpaket 17a auf. Erstes und zweites Lamellenpaket 13a, 17a sind derart ineinandergreifend angeordnet, dass die Lamellen des ersten Lamellenpakets 13a und die zweiten Lamellen des zweiten Lamellenpakets 17a in Axialrichtung gesehen benachbart zueinander und alternierend angeordnet sind. **In** der Neutralstellung befindet sich zwischen den ersten und zweiten Lamellen in Axialrichtung gesehen ein Spalt. **In** der Betätigungsstellung der in der Figur 5 gezeigt ist, wird durch eine axiale Verschiebung der Lamellen ein Reibschluss zwischen den alternierend angeordneten Lamellen des ersten und zweiten Lamellenpakets 13a, 17a hergestellt. Dieser grundsätzliche Aufbau und die Anordnung der Lamellenpakete und Lamellenträger sind aus den aus dem Stand der Technik bekannten und werden an dieser Stelle nicht näher beschrieben.

Der erste Lamellenträger 13 ist vorzugsweise der in Radialrichtung gesehen äußere Lamellenträger. Der zweite Lamellenträger 17 ist dann entsprechend der innere Lamellenträger. Der erste Lamellenträger 13 ist an dem Bremsgehäuse 9 gehäusefest angebunden oder wird alternativ durch das Bremsgehäuse 9 gebildet.

Der zweite Lamellenträger 17 ist über ein Radiallager 18 auf der Seitenabtriebswelle 8 gelagert und ist axial gesichert. In der in der Figur 3 gezeigten Neutralstellung der Bremse 22 ist der zweite Lamellenträger 17 mechanisch entkoppelt, d.h. nicht drehfest auf der Seitenabtriebswelle 8 gelagert und rotiert demnach nicht mit der Drehzahl der Seitenabtriebswelle 8 mit. Die Drehzahl des zweiten Lamellenträgers 17 ist in der Neutralstellung 0.

Die Bremse 22 umfasst des Weiteren eine Betätigungsnabe 5, die auf der Seitenabtriebswelle 8 zur Übertragung eines Drehmoments drehfest angeordnet ist. Die Betätigungsnabe 5 dient, wie nachfolgend näher beschrieben, der drehfesten Anbindung / mechanischen Kopplung des zweiten Lamellenträgers in einem Betätigungsfall an die Seitenabtriebswelle 8. Hierfür ist die Betätigungsnabe 5 in Axialrichtung verschieblich auf der Seitenabtriebswelle 8 gelagert und über eine Synchronisiereinheit 7 an den zweiten Lamellenträger 17 reibschlüssig anbindbar.

Die Betätigungsnabe 5 ist als Keilnabe 5a ausgeführt, die über eine Keilverzahnung formschlüssig auf der Seitenabtriebswelle 8 angeordnet ist und aufgrund der formschlüssig ineinandergreifenden Verzahnung zwischen Keilnabe 5a und Seitenabtriebswelle 8 axialverschieblich auf der Seitenabtriebswelle 8 gelagert ist. Die axiale Verschiebbarkeit der Betätigungsnabe 5 ist durch den Doppelpfeil angezeigt.

In der Keilnabe 5a sind radiale Ölbohrungen 11 als Durchgangsbohrungen eingebracht, die ausgehend von einer äußeren Mantelfläche des ringförmigen Abschnitts der Keilnabe 5a zu einer radial inneren der Seitenabtriebswelle 8 zugewandten Mantelfläche der Keilnabe 5a verlaufen.

Die Seitenabtriebswelle 8 enthält ebenfalls eine Ölbohrung 12. Die Ölbohrung 12 ist ausgehend von einer Stirnseite der Seitenabtriebswelle 8 zunächst in Axialrichtung verlaufend ausgeführt und zweigt dann in eine Vielzahl von Radialbohrungen 12a ab. Die Radialbohrungen 12a erstrecken sich ausgehend von der axialen Ölbohrung 12 bis zur Oberfläche der Seitenabtriebswelle 8 und ermöglichen somit eine Ölzuführung auf die äußere Mantelfläche der Seitenabtriebswelle 8 im Bereich der Austrittsöffnungen der Radialbohrungen 12a. Die Ölzuführung zur Schmierung der Lamellenpakete ist durch die Pfeile angezeigt. **In** der in der Figur 3 gezeigten Neutralstellung der Bremse 22 ist die Betätigungsnabe 5 derart auf der Seitenabtriebswelle 8 angeordnet, dass die Radialbohrungen 12a von der inneren Mantelfläche der Betätigungsnabe 5 verdeckt sind.

Die Betätigungsnabe 5 weist des Weiteren einen radialen Abschnitt 5b und sich von dem radialen Abschnitt axial erstreckenden ringförmigen Betätigungsabschnitt 5c auf. Der Betätigungsabschnitt 5c erstreckt sich in Richtung auf die ineinander geschachtelt angeordneten ersten und zweiten Lamellenpakete 13a und 17b. In der Neutralstellung befindet sich zwischen dem Betätigungsabschnitt 5c und dem zweiten Lamellenpaket 17a bzw. der ersten außenliegenden Lamelle in Axialrichtung gesehen ein Spalt Δd+, was dem Abstand Δd plus einigen Millimetern entspricht.

Die Bremse 22 weist des Weiteren eine Synchronisiereinheit 7 auf, die als Einkonus-Synchronisierer ausgeführt ist. Die Kegelreibkupplung mit Reibbelägen der Synchronisiereinheit wird zwischen einem Synchronring 14 und einem Synchronkörper 24 gebildet. Diese Art der Synchronisierung ist aus dem Stand der Technik bekannt und wird an dieser Stelle nicht näher beschrieben.

Der Synchronkörper 24 ist an dem zweiten Lamellenträger 17 ausgebildet oder mit diesem gekoppelt.

Der Synchronring 14 weist einen Reibkonus mit einer Reibfläche auf und erstreckt sich axial in ein Koppelelement 14a, welches sich federvorbelastet über eine Feder 4 an dem radialen Abschnitt 5c der Betätigungsnarbe 5 abstützt und in einem Aufnahmeraum zwischen Betätigungsabschnitt 5c und Keilnabe 5a axial verschiebbar gelagert ist.

Das Koppelelement 14a ist über ein axiales Lager 3a und ein Federelement 26 an einem seitenabtriebsfesten Axialanschlag abgestützt.

In der Neutralstellung der Bremse 22 weist der Synchronring 14 in Axialrichtung gesehen einen Abstand Δd zu dem am zweiten Lamellenträger17 angeordneten Synchronkörper 24 auf.

Die Bremse 22 umfasst weiterhin einen Betätigungskolben 2, der vorzugsweise hydraulisch aktuiert ist. Die Aktuatorik ist in den Zeichnungen nicht dargestellt und näher beschrieben. Der Betätigungskolben 2 ist über ein axiales Lager 3b an dem radialen Abschnitt 4b der Betätigungsnabe 4 abgestützt. Die Betätigungsnabe 4 ist durch Einleitung einer Betätigungskraft die durch den Pfeil FO dargestellt über den Betätigungskolben axial verschiebbar.

Die Federkonstante der Feder 4 ist größer als die Federkonstante der Feder 26.

Ist die Bremse 22 in der Neutralstellung geöffnet, werden die Lamellenpakete der Bremse 22 durch die abgedeckte Ölbohrung 12/ Radialbohrungen 12a nicht beölt.

Bei einer Betätigung der Bremse wird die Betätigungsnabe 4 über den Betätigungskolben 2 mit einer Kraft FO beaufschlagt, sodass die Betätigungsnabe 4 axial verschoben wird. In einem ersten Schritt, der in der Figur 4 dargestellt ist, wird zunächst bei der Axialverschiebung und Kraftbeaufschlagung in Richtung des Pfeils FO die Betätigungsnabe 4 axial verschoben und über die Feder 4 und das Koppelelement 14a wird der Synchronring 14 ebenfalls axial in Richtung auf den Synchronkörper 24 verlagert. Synchronring 14 und Synchronkörper gelangen in eine reibschlüssige Verbindung.

Nach abgeschlossener Synchronisation in dem gezeigten ersten Verfahrensschritt ist der zweite Lamellenträger 17 über die Synchronisiereinheit 7 mit der Seitenabtriebswelle 8 drehfest verbunden und dreht mit der Drehzahl der Seitenabtriebswelle mit. Die axiale Verschiebung in dem ersten Verfahrensschritt entspricht der Verschiebung Δd.

In dieser Situation nach dem ersten Verfahrensschritt (erster Lamellenträger 17 ist an die Seitenabtriebswelle 8 drehfest gekoppelt) ist die Betätigungsnabe 4 bzw. der axiale Betätigungsabschnitt 4c über einen Spalt Δd+ Minus Δd von dem zweiten Lamellenpaket des zweiten Lamellenträgers 17 beabstandet angeordnet.

In dem in der Figur 5 gezeigten zweiten Verfahrensschritt wird über eine weitere Verschiebung des Betätigungskolbens 2 und der Betätigungsnabe 5 nach einer Verschiebung um den axialen Abstand + der Betätigungsabschnitt 5c zur Anlage an die äußere Lamelle des zweiten Lamellenpakets 17a gebracht, so dass eine Betätigungskraft auf das zweite Lamellenpaket 17a ausgeübt wird. Hierdurch werden die Spalte zwischen den alternierend angeordneten Lamellen des ersten und zweiten Lamellenpakets 13, 17 geschlossen Durch die reibschlüssige Verbindung zwischen den beiden Lamellenpaketen kann somit ein Bremsmoment erzeugt werden.

Durch das zuvor beschriebene "Schließen" der Bremse 22 in dem zweiten Verfahrensschritt wird die Feder 4 komprimiert und die axiale Relativposition zwischen Kopplungselement 14a und Betätigungsnabe 5 verändert sich. Da die Betätigungsnabe 5 drehfest auf der Seitenabtriebswelle 8 angeordnet ist und der zweite Lamellenträger 17 über die Synchronisiereinheit 7 an der Betätigungsnabe 5 drehfest angebunden ist und weiterhin im Kraftfluss die reibschlüssig wirkverbundenen Lamellenpakete über den ersten Lamellenträger 13 gehäusefest abgestützt sind, wird das Bremsmoment auf die Seitenabtriebswelle 8 aufgebracht.

In Figur 5 ist die Bremse 22 im geschlossenen Zustand dargestellt.

In dieser Situation ist die Betätigungsnabe 5, wie es aus Zeichnung ersichtlich ist axial verschoben und die Radialbohrung 11 ist in Überdeckung mit den Radialbohrungen 12a gebracht, so dass eine Ölzuführung zu den Lamellenpaketen gewährleistet wird. Die Betätigungsnabe 5 liegt an einem Axialanschlag 10 axial abgestützt an der Seitenantriebswelle 8 an und kann nicht weiter axial verschoben werden.

Beim Öffnen der Bremse 22 wird zuerst die Bremskraft verringert und dann durch die Federkraft der Feder 26 die Synchronistionseinheit 7 geöffnet. Nach dem Entkoppeln des zweiten Lamellenträgers 17 von der Seitenabtriebswelle 8 bleibt dieser wieder mit Drehzahl 0 stehen.

Das Öl wird mittels einer Pumpe zu einem Filter gepumpt, um geg. Reibpartikel auszufiltern. Dadurch vermeidet man oxidativen Feinstaub in der Umwelt.

### Bezugszeichenliste

1 Elektrischer Achsantrieb
2 Betätigungskolben
3a -3b axiale Lager
4 Feder
5 Betätigungsnabe
5a Keilnabe
5b radialer Abschnitt
5c axialer Betätigungsabschnitt der Betätigungsnabe
6 Gehäuse
7 Synchronisiereinheit
8 Seitenabtriebswelle
9 Bremsgehäuse
10 Anschlag
11Bohrung
12 Ölbohrung
12a Radialbohrung
13 erster Lamellenträger
13a erstes Lamellenpaket
14 Synchronring
14a Kopplungselement
17 zweiter Lamellenträger
17a zweites Lamellenpaket
18 Radiallager
20 Elektrische Maschine inkl. Getriebestufe
21 Differential
22 Bremse
23 Rad
24 Synchronkörper
26 Feder

## Patentansprüche

1. Elektrischer Antrieb (1) für ein Fahrzeug, wobei mindestens eine elektrische Maschine (20), ein Differential (21) und zwei Bremsen (22) in einem gemeinsamen Gehäuse (6) verbaut sind, wobei die Bremsen (22) Lamellenbremsen mit einem ersten und einem zweiten Lamellenträger (13, 17) mit zugeordnetem ersten und zweitem Lamellenpaket (13a, 17a) sind und wobei die Bremsen (22) ein Bremsgehäuse (9) umfassen, und wobei die ersten Lamellenträger (13) gehäusefest angeordnet und die zweiten Lamellenträger (17) in einer Neutralstellung mechanisch entkoppelt und nicht mitdrehend auf den Seitenabtriebswellen (8) des Differentials (21) angeordnet sind und wobei im Betätigungsfall die zweiten Lamellenträger (17) an die Seitenabtriebswellen (8) drehfest anbindbar sind und die Seitenabtriebswellen (8) über die ersten und zweiten Lamellenpakete (13, 17) mit dem Bremsgehäuse (9) verbindbar sind, um ein Bremsmoment auf das Fahrzeug aufzubringen.

2. Elektrischer Antrieb (1) für ein Fahrzeug nach Anspruch 1, wobei der erste Lamellenträger (13) der in Radialrichtung gesehen äußere Lamellenträger und der zweite Lamellenträger (17) der radial liegend innere Lamellenträger ist.

3. Elektrischer Antrieb (1) nach Anspruch 1 oder 2, wobei die Bremse eine auf der Seitenabtriebswelle (8) drehfest angeordnete aber axial verschiebbar gelagert Betätigungsnabe (5) umfasst, und wobei die Betätigungsnabe (5) einen Betätigungsabschnitt (5c) aufweist.

4. Elektrischer Antrieb (1) nach Anspruch 3, wobei im Betätigungsfall eine Betätigungskraft über einen Betätigungskolben (2) auf die Betätigungsnabe (5) aufbringbar ist, um eine Axialverschiebung der Betätigungsnabe (5) zu bewirken.

5. Elektrischer Antrieb (1) nach einem der vorangehenden Ansprüche, wobei die drehfeste Anbindung der zweiten Lamellenträger (17) über ein Koppelungselement (14a) herstellbar ist, wobei das Koppelungselement (14a) axial verschiebbar und über eine Feder (4) abgestützt auf der Betätigungsnabe (5) angeordnet ist.

6. Elektrischer Antrieb (1) nach einem der vorangehenden Ansprüche, wobei die Bremse eine Synchronisiereinheit (7) mit einem Synchronring (14) und einem Synchronkörper (24) umfasst, wobei der Synchronkörper (24) an dem zweiten Lamellenträger (17) angebunden und der Synchronring (14) an dem Kopplungselement (14a) angebunden ist, und wobei bei Aufbringen einer Betätigungskraft über den Betätigungskolben (2) auf die Betätigungsnabe (4) eine reibschlüssige Verbindung zwischen Synchronring (14) und Synchronkörper (24) zur Erzielung eine drehfesten Festlegung des zweiten Lamellenträgers (13) herstellbar ist.

7. Elektrischer Antrieb (1) nach Anspruch 1, wobei das erste Lamellenpaket (13a) über den Betätigungsabschnitt (5c) der Betätigungsnabe (5) mit dem zweiten Lamellenpaket (13a) und der jeweiligen Seitenabtriebswellen (8) verbindbar ist.

8. Elektrischer Antrieb (1) nach einem der vorangehenden Ansprüche, wobei die Synchronisiereinheit (7) ein Einkonus-Synchronisierer ist.

9. Elektrischer Antrieb (1) nach einem der vorangehenden Ansprüche, wobei das Kopplungselement (14a) über eine Feder und einem axialen Lager (3a) an dem zweiten Lamellenträger (17) abgestützt gehalten ist.

10. Verfahren zum Bremsen eines elektrischen Antriebs (1) nach einem der Ansprüche 1 bis 9, wobei die geöffnete Bremse (22) in der Neutralstellung mit erstem und zweitem Lamellenträger (13, 17) mit zugeordneten Lamellenpakten (13a, 17a) nicht rotierend mit den Seitenabtriebswellen (8) ausgeführt ist, und bei Betätigung der Bremse (22) in zwei aufeinander ablaufenden Verschiebungsschritten zunächst die zweiten Lamellenträger (17) mit den Seitenabtriebswellen (8) drehfest verbunden und anschließend oder gleichzeitig über eine weitergehende Betätigungskraft eine reibschlüssige Verbindung zwischen den ersten und zweiten Lamellenpaketen (13a, 17a) hergestellt und die Seitenabtriebswellen (8) über die ersten und zweiten Lamellenpakete mit dem Bremsgehäuse (9) zur Erzeugung eines Bremsmoments verbunden werden.

11. Verfahren nach Anspruch 10, wobei die zweiten Lamellenträger (17) in dem ersten Verfahrensschritt über die Synchonisiereinheiten (7) an den Seitenabtriebswellen (8) festgelegt werden und anschließend in einem weiteren Verfahrensschritt die alternierend angeordneten Lamellen der beiden Lamellenpakete (13a, 17a) zueinander in Reibkontakt gebracht werden.

12. Verfahren nach Anspruch 10 oder 11, wobei bei offenen Bremsen (22) in der Neutralstellung keine Beölung der Lamellenpakete (13a, 17a) erfolgt, aber bei geschlossener Bremse (22) eine Beölung der Lamellenpakete (13a, 17a) durch eine Ölbohrung (12) und Radialbohrungen (12a) entlang der Seitenabtriebswelle (8) und einer Radialbohrung (11) in der axial verschiebbar gelagerten Betätigungsnabe (5) erfolgt.

## Claims

1. Electric drive (1) for a vehicle, wherein at least one electric machine (20), a differential (21), and two brakes (22) are installed in a common housing (6), wherein the brakes (22) are multi-disc brakes with a first and a second disc carrier (13, 17) with the associated first and second set of discs (13a, 17a), and wherein the brakes (22) comprise a brake housing (9), and wherein the first disc carriers (13) are arranged fixed to the housing and the second carriers (17) are arranged in a neutral position mechanically uncoupled and not in co-rotating fashion on the side driven shafts (8) of the differential (21) and wherein, when actuated, the second disc carriers (17) can be attached non-rotatably to the side driven shafts (8) and the side driven shafts (8) can be connected to the brake housing (9) via the first and second sets of discs (13, 17) in order to apply a brake torque to the vehicle.

2. Electric drive (1) for a vehicle according to Claim 1, wherein, viewed in the radial direction, the first disc carrier (13) is the outer disc carrier and the second disc carrier (17) is the radially inwardly situated disc carrier.

3. Electric drive (1) according to Claim 1 or 2, wherein the brake comprises an actuating hub (5) arranged non-rotatably on the side driven shaft (8) but mounted axially displaceably, and wherein the actuating hub (5) has an actuating portion (5c).

4. Electric drive (1) according to Claim 3, wherein, when actuated, an actuating force can be applied to the actuating hub (5) via an actuating piston (2) in order to effect an axial displacement of the actuating hub (5).

5. Electric drive (1) according to one of the preceding claims, wherein the non-rotatable attachment of the second disc carrier (17) can be established via a coupling element (14a), wherein the coupling element (14a) is arranged on the actuating hub (5) axially displaceably and supported via a spring (4).

6. Electric drive (1) according to one of the preceding claims, wherein the brake comprises a synchronizer unit (7) with a synchronizer ring (14) and a synchronizer body (24), wherein the synchronizer body (24) is attached to the second disc carrier (17) and the synchronizer ring (14) is attached to the coupling element (14a), and wherein, when an actuating force is applied to the actuating hub (4) via the actuating piston (2), a frictional connection can be established between the synchronizer ring (14) and the synchronizer body (24) in order to obtain non-rotatable fixing of the second disc carrier (13).

7. Electric drive (1) according to Claim 1, wherein the first set of discs (13a) can be connected to the second set of discs (13a) and the respective side driven shafts (8) via the actuating portion (5c) of the actuating hub (5).

8. Electric drive (1) according to one of the preceding claims, wherein the synchronizer unit (7) is a single-cone synchronizer.

9. Electric drive (1) according to one of the preceding claims, wherein the coupling element (14a) is retained supported on the second disc carrier (17) via a spring and an axial bearing (3a).

10. Method for braking an electric drive (1) according to one of Claims 1 to 9, wherein the open brake (22) is configured in the neutral position with the first and second disc carriers (13, 17) with the associated sets of discs (13a, 17a) not rotating with the side driven shafts (8), and, when the brake (22) is actuated in two successive displacement steps, first the second disc carriers (17) are non-rotatably connected to the side driven shafts (8), and then or simultaneously a frictional connection is established between the first and second sets of discs (13a, 17a) via a continuing actuating force and the side driven shafts (8) are connected to the brake housing (9) via the first and second sets of discs in order to generate a brake torque.

11. Method according to Claim 10, wherein the second disc carriers (17) are fixed to the side driven shafts (8) in the first method step via the synchronizer units (7) and then in a further method step the alternatingly arranged discs of the two sets of discs (13a, 17a) are brought into frictional contact with one another.

12. Method according to Claim 10 or 11, wherein no oiling of the sets of discs (13a, 17a) takes place in the case of open brakes (22) in the neutral position but in the case of a closed brake (22), the sets of discs (13a, 17a) are oiled through an oil bore (12) and radial bores (12a) along the side driven shaft (8) and a radial bore (11) in the axially displaceably mounted actuating hub (5).

## Revendications

1. Entraînement électrique (1) pour un véhicule, au moins une machine électrique (20), un différentiel (21) et deux freins (22) étant installés dans un carter commun (6), les freins (22) étant des freins multidisques avec un premier et un deuxième porte-disque (13, 17) avec un premier et un deuxième ensemble de disques (13a, 17a) associé et les freins (22) comprenant un carter de frein (9), et les premiers porte-disques (13) étant disposés de manière solidaire du carter et les deuxièmes porte-disques (17) étant découplés mécaniquement dans une position neutre et étant disposés sans pouvoir tourner sur les arbres de sortie latéraux (8) du différentiel (21) et, en cas d'actionnement, les deuxièmes porte-disques (17) pouvant être fixés de manière solidaire en rotation sur les arbres de sortie latéraux (8) et les arbres de sortie latéraux (8) pouvant être reliés au carter de frein (9) par les premiers et les deuxièmes ensembles de disques (13, 17) pour appliquer un couple de freinage sur le véhicule.

2. Entraînement électrique (1) pour un véhicule selon la revendication 1, le premier porte-disque (13) étant le porte-disque extérieur vu dans la direction radiale et le deuxième porte-disque (17) étant le porte-disque radialement intérieur.

3. Entraînement électrique (1) selon la revendication 1 ou 2, le frein comprenant un moyeu d'actionnement (5) disposé de manière solidaire en rotation tout en étant monté de manière à pouvoir coulisser axialement sur l'arbre de sortie latéral (8), et le moyeu d'actionnement (5) comportant une section d'actionnement (5c).

4. Entraînement électrique (1) selon la revendication 3, une force d'actionnement pouvant être appliquée, en cas d'actionnement, sur le moyeu d'actionnement (5) par un piston d'actionnement (2) pour provoquer un coulissement axial du moyeu d'actionnement (5).

5. Entraînement électrique (1) selon l'une des revendications précédentes, la fixation solidaire en rotation du deuxième porte-disque (17) pouvant être établie par un élément de couplage (14a), l'élément de couplage (14a) pouvant être coulissé axialement et étant disposé sur le moyeu d'actionnement (5) avec un soutien par un ressort (4).

6. Entraînement électrique (1) selon l'une des revendications précédentes, le frein comprenant une unité de synchronisation (7) avec une bague de synchronisation (14) et un corps de synchronisation (24), le corps de synchronisation (24) étant fixé sur le deuxième porte-disque (17) et la bague de synchronisation (14) étant fixée sur l'élément de couplage (14a), une liaison par friction entre la bague de synchronisation (14) et le corps de synchronisation (24) pouvant être établie pour obtenir une immobilisation solidaire en rotation du deuxième porte-disque (13) lors de l'application d'une force d'actionnement par le piston d'actionnement (2) sur le moyeu d'actionnement (4).

7. Entraînement électrique (1) selon la revendication 1, le premier ensemble de disques (13a) pouvant être relié par la section d'actionnement (5c) du moyeu d'actionnement (5) au deuxième ensemble de disques (13a) et aux arbres de sortie latéraux (8) respectifs.

8. Entraînement électrique (1) selon l'une des revendications précédentes, l'unité de synchronisation (7) étant un synchroniseur à cône unique.

9. Entraînement électrique (1) selon l'une des revendications précédentes, l'élément de couplage (14a) étant maintenu avec un soutien sur le deuxième porte-disque (17) par un ressort et un palier axial (3a).

10. Procédé de freinage d'un entraînement électrique (1) selon l'une des revendications 1 à 9, le frein (22) ouvert étant réalisé sans rotation avec les arbres de sortie latéraux (8) dans la position neutre avec le premier et le deuxième porte-disque (13, 17) avec des ensembles de disques (13a, 17a) associés, et, lors de l'actionnement du frein (22) en deux étapes de coulissement consécutives, le deuxième porte-disque (17) étant d'abord relié de manière solidaire en rotation aux arbres de sortie latéraux (8), puis, ou simultanément, par une autre force d'actionnement, une liaison par friction étant établie entre les premiers et deuxièmes ensembles de disques (13a, 17a) et les arbres de sortie latéraux (8) étant reliés au carter de frein (9) par les premiers et deuxièmes ensembles de disques pour générer un couple de freinage.

11. Procédé selon la revendication 10, le deuxième porte-disque (17) étant immobilisé sur les arbres de sortie latéraux (8) par les unités de synchronisation (7) dans la première étape de procédé puis les disques disposés en alternance des deux ensembles de disques (13a, 17a) étant amenés en contact par friction les uns par rapport aux autres dans une autre étape de procédé.

12. Procédé selon la revendication 10 ou 11, les ensembles de disques (13a, 17a) n'étant pas lubrifiés lorsque les freins (22) sont ouverts dans la position neutre, les ensembles de disques (13a, 17a) étant toutefois lubrifiés par un alésage d'huile (12) et des alésages radiaux (12a) le long de l'arbre de sortie latéral (8) et d'un alésage radial (11) dans le moyeu d'actionnement (5) monté de manière à pouvoir coulisser axialement lorsque le frein (22) est fermé.
